# EUROPEAN PATENT APPLICATION

(11) **EP 4 769 088 A1**
(43) Date of publication of application: **01.07.2026**
(21) Application number: 24307293.1
(22) Date of filing: 24.12.2024
(51) Int. Cl.: G06F 3/0354, G06F 3/042

(54) **SYSTEM FOR DETERMINING SPATIAL FEATURES OF AN OBJECT USING LIGHT PLANES**

(71) Applicant: Prophesee, 75012 Paris (FR)
(72) Inventor: LAGORCE, Xavier, 94100 SAINT-MAUR-DES-FOSSES (FR); HAESSIG, Germain, 75008 PARIS (FR); TCHOUPRINA, Artiom, 75013 PARIS (FR)
(74) Representative: Regimbeau

(57) **Abstract**

A system for determining spatial features of an object (5) within a control space, comprising:
- a light source (3) configured to illuminate the control space,
- a camera (2) whose field of view includes the control space,
characterized in that the camera (2) is an event-based camera configured to detect a variation of light in the field of view and generate an event when a variation of light is detected, and in that the light source (3) is configured to emit spatially structured light forming a first light plane (P1) and a second light plane (P2), the first light plane (P1) being different from the second light plane (P2), and in that the system (1) comprises a processor (10) configured to receive events from the event-based camera (2), and to compute a speed of the object (5) from events caused by the object (5) intersecting the first light plane (P1) and events caused by the object (5) intersecting the second light plane (P2).

## Description

### SUMMARY OF THE INVENTION

The present invention relates to tactile human-machine interfaces and particularly to systems generating tactile interface from arbitrary planar surfaces.

### TECHNICAL FIELD AND PRIOR ART

Many devices use a two-dimensional Human-Machine Interface (HMI) such as a screen, in order to communicate with an operator. Though it might be possible to use additional devices such as a mouse, a trackpad or a ball-navigator to navigate in the interface, a more user-friendly solution is to use tactile interfaces. The operator can then directly navigate through the interface by touching a tactile screen with a finger for instance. The tactile screen comprises integrated sensor detecting the motion of the finger.

In some situations, it can be of high interest to generate a tactile interface from an arbitrary surface. A motion of the operator relative to the tactile interface can be detected, without requiring a surface to be equipped with sensors. Such tactile interfaces can be found in different fields of application, such as digital white boards, video games wherein an arbitrary flat surface is used as a gamepad, or input devices for augmented reality (AR) or virtual reality (VR). Such interfaces can allow gestures or drawings inputs. They offer hygienic solutions since they do not rely on the contact with the finger of the operator, but on an optic detection of its motion.

Solutions have been developed to transform an existing non tactile screen or any flat surface such as a wall or table in a tactile interface for instance.

A first solution is to use a system comprising a camera with a light source projecting lines on a flat surface and detecting movements of a pen on the flat surface. This solution allows to detect a two-dimensional position of the tip of the pen, projected in the plane of the flat surface. However, there could be occlusion problems depending on the position of the operator relative to the camera, for instance if an object is blocking the line of sight between the pen being hit by a laser and the camera.

Another solution is to use a system mounted on a side of an existing screen. The system comprises a sensor with at least a camera and a laser that flashes at a preset frequency. The camera detects the movement of the finger of the operator on the screen. After a calibration, the sides of the existing screen correspond to the sensing range of the system. However, such solutions show high latency and cannot detect very short contacts or taps on the existing screens.

### SUMMARY OF THE INVENTION

An objective of the present invention is to propose a system for dynamic positioning of an arbitrary object relative to a reference surface which shows low latency and can detect the speed of the object close to the reference surface. It can be used to transform the reference surface in a tactile interface.

To achieve the aforementioned objective, the present invention provides a system for determining spatial features of an object within a control space, comprising:
- a light source configured to illuminate the control space,
- a camera whose field of view includes the control space,
characterized in that the camera is an event-based camera configured to detect a variation of light in the field of view and generate an event when a variation of light is detected, and in that the light source is configured to emit spatially structured light forming a first light plane and a second light plane, the first light plane being different from the second light plane, and in that the system comprises a processor configured to receive events from the event-based camera, and to compute a speed of the object from events caused by the object intersecting the first light plane and events caused by the object intersecting the second light plane.

The proposed system does not require a dedicated object or stylus to operate. Using the event-based camera, the latency of the system is highly reduced. Information relative to the motion of the object within the control space can be transmitted to the processor at high frequency, since motionless background information is not captured by the event-based sensor. Using the two distinct light planes, a speed estimation of the object can be computed. The low latency allows to detect very short contacts like "clicks" or small taps within the control space that existing solutions could not detect. Smoother trajectory estimation of the object can be obtained with further processing, such that the system can be used efficiently for obtaining spatial features of an object, including motion detection and dynamic positioning to transform a reference surface inside the control space into a tactile interface.

The invention is advantageously supplemented by the following features, taken individually or in any of their technically possible combinations:
- first light plane is parallel to a reference surface delimiting a side of the control space;
- a distance between the first light plane and the second light plane within the control space is known for every point of the first light plane and the second light plane;
- the first light plane is parallel to the second light plane;
- a distance between the first light plane and the second light plane is less than 1 mm, preferably less 0,5 mm;
- the processor is configured to discriminate events caused by the object intersecting the first light plane from events caused by the object intersecting the second light plane;
- the light source is configured to illuminate the first light plane with a first light pattern or with a first timing and to illuminate the second light plane with a second light pattern or a second timing, the processor being configured to discriminate the events based on light pattern or timing;
- the first light plane is modulated using a first frequency pattern, and the second light plane is modulated using a second frequency pattern, the first frequency pattern being different from the second frequency pattern;
- the light source is configured to illuminate the first light plane and the second light plane consecutively;
- the system is configured to implement a filtering function for detecting only high frequency variation of light in the field of view;
- each event is associated with an address reflecting a position relative to the reference surface wherein the variation of light occurred;
   the processor is configured to determine whether events are caused by the object based on associated addresses;
- the processor is configured to compute an orientation of the object relative to the reference surface based on addresses of events caused by the object intersecting the first light plane and events caused by the object intersecting the second light plane;
- the processor is configured to track a position of the object relative to the reference surface based on addresses of events caused by the object intersecting the first light plane or the second light plane;
- the processor is configured to reconstruct a three-dimensional shape of the object, based on addresses of events caused by the object intersecting the first light plane and the second light plane;
- the system further comprises a support, wherein the light source and the event-based camera are fixed to the support;
- the system further comprises a plurality of active markers disposed each at a respective reference position relative to the reference surface, and connected to the event-based camera, wherein the processor is configured to compute a position of the event-based camera relative to the reference surface based on the respective reference position of the plurality of active markers.

### BRIEF DESCRIPTION OF THE DRAWINGS

Other features and advantages of the present invention will appear in the description hereinafter, in reference to the appended drawings, where:
Figure 1 represents a schematic perspective view of a system in an embodiment of the present invention.
Figure 2 is a side view of the system in an embodiment.
Figure 3 is a top view of the system in the embodiment of figure 2.
Figure 4 is a schematic view of the components of the system in an embodiment.
Figure 5 is a schematic view of the system in a first application.
Figure 6 is a schematic view of the system in a second application.
Figure 7 is a schematic representation of light patterns and sequences of events generated by the system.

### DETAILED DESCRIPTION OF EMBODIMENTS

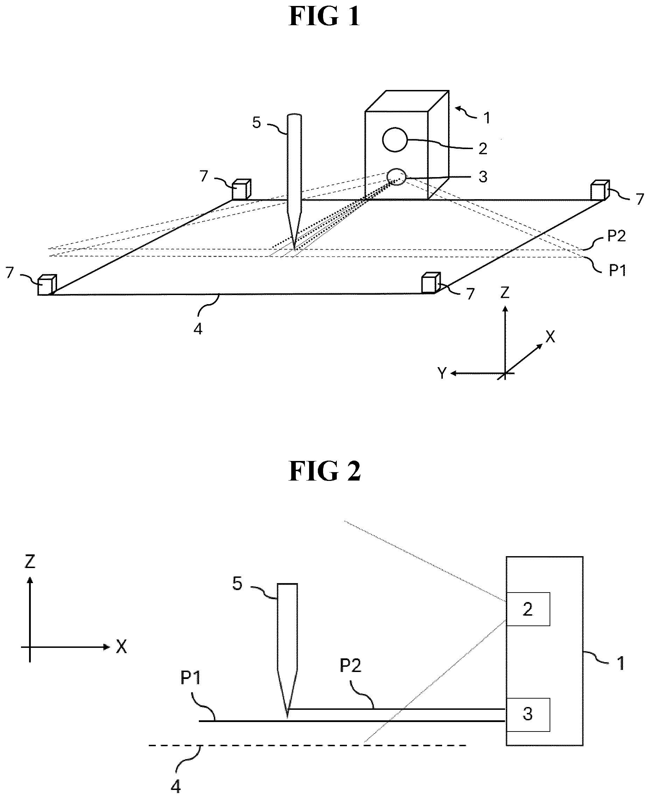

The system 1 described herein aims at providing spatial features of an object 5 in a control space. The control space is typically designed as a three-dimensional space extending from a reference surface 4. In reference to figure 1, the reference surface 4 is a planar surface that the system 1 aims at converting into a touch or pointing surface, that is a tactile human-machine interface. The reference surface 4 could be an active surface such as a display screen or a passive surface such as a wall or a table. It could also be a virtual surface. The object 5 is moved by an operator in the control space, in the vicinity to the reference surface 4.

The system 1 comprises a camera 2 whose field of view includes the control space, a processor 10 and a light source 3 configured to illuminate the control space.

The camera 2 is an event-based camera 2 configured to detect a variation of light in the control space, and more precisely over the reference surface 4. The event-based camera 2 can distinguish between an augmentation of luminosity or brightness or diminution of luminosity. Any change in light intensity may trigger an event.

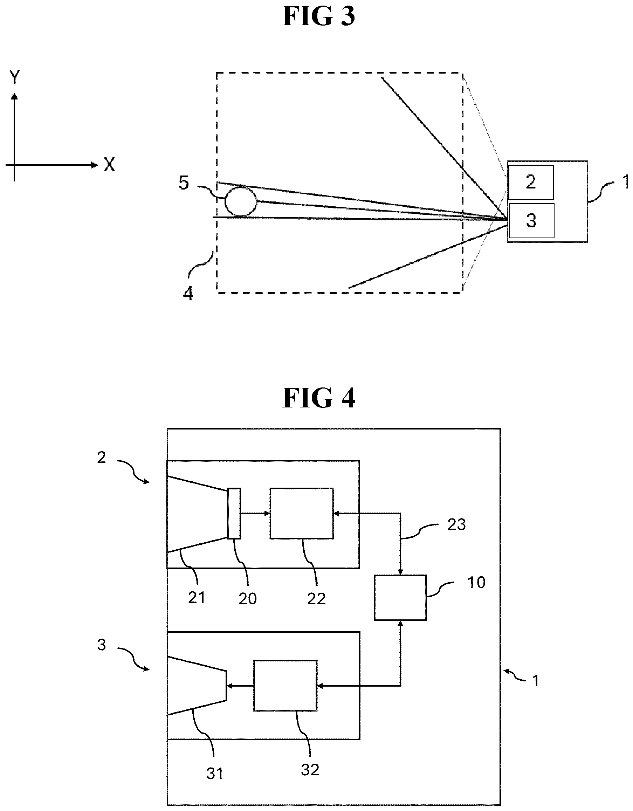

In reference to figure 4, the event-based camera 2 comprises an optical system 21, a sensor 20 and an internal processing unit 22. The sensor 20 is a dynamic vision sensor (DVS) comprising a plurality of pixels forming a grid. The optical system 21 is typically oriented towards the reference surface 4.

The event-based camera 2 does not capture images using a shutter as a conventional frame-based camera. Instead, each pixel of the sensor 20 operates independently and asynchronously, responding to local changes in brightness, that is variations of light in the field of view, as they occur. Therefore, the event-based camera 2 acquires a temporal luminance profile sensed by each pixel.

The pixels acquire information with a very high temporal resolution, of the order of a microsecond. The event-based camera 2 can capture fast changing information in the control space, while the motionless background information is not captured. The internal processing unit 22 may comprise an internal clock. The event-based camera 2 is configured to generate an event associated to a timestamp, each time a pixel detects a variation of light.

The event-based camera 2 is disposed next to the reference surface 4, so that the entire control space, comprising the reference surface 4, is captured by the optical system 21 of the event-based camera 2.

Preferably, the event-based camera 2 communicates with the light source 3 through the processor 10. Alternatively, the event-based camera 2 and the light source 3 may be directly connected. For instance, the event-based camera 2 is connected through a communication bus 23 to the processor 10 or to the light source 3. The event-based camera 2 may communicate with the light source 3 using a wireless connection. The processor 10 is configured to receive events from the event-based camera 2, typically through the communication bus 23.

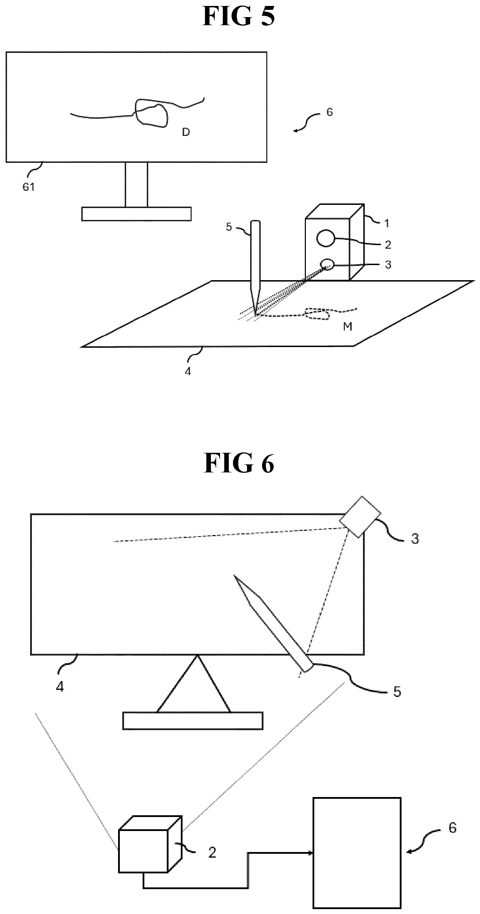

The light source 3 is disposed so as to illuminate the control space, typically next to the reference surface 4, preferably close to the event-based camera 2. The light source 3 may be disposed on one side of the reference surface 4, for instance in the middle of a side of the reference surface 4, as illustrated in figure 1. Alternatively, the light source 3 may be disposed at a corner of the reference surface 4, as illustrated in figure 5. Preferably, the light source 3 is disposed opposite to the operator moving the object 5 in the control space.

The light source 3 may be a standard light source emitting in the visible domain or in the infrared domain. The light source 3 can use several emission technologies exist as laser or light-emitting diodes (LED). In the following, we focus on a case where the light source 3 is a line laser configured to project lines in the visible domain or in the infrared domain, but the present invention is not limited to this embodiment.

The light source 3 may be a complex device such as a projector of type Digital Light Processing (DLP) using a Digital Micromirror Device (DMD). The light source may comprise a micro-electromechanical system (MEMS), through which the light source is scanned to project lines forming a light plane. Alternatively or in addition, the light source 3 may comprise a diffractive optical element (DOE) configured to to generate a line pattern from a point.

In reference to figure 4, the light source 3 comprises a light generator 31. For instance, in an embodiment where the light source 3 is a laser, the light generator 31 may be a laser line generator or a structured light laser (SLL).

Preferably, the light source 3 comprises an internal processing unit 32 configured to control the light emitted by the light generator 31. To do so, the internal processing unit 32 receives information from the processor 10. Alternatively, the processor 10 may be configured to directly control the light generator 31. For instance, in an embodiment where the light source 3 is a projector DLP-DMD, the internal processing unit 32 comprises a DMD chip, and the light generator 31 comprises a lamp or a LED and a plurality of optical devices such as mirrors and lens.

The system 1 presents the particularity that the light source 3 is configured to emit spatially structured light forming a first light plane P1 and a second light plane P2. More precisely, the first light plane P1 is different from the second light plane P2. Preferably, the light source 3 is configured to emit light forming a plurality of light planes, to cover the entire control space. This allows for better, that is more precise motion detection of the object 5 in the control space but results in a more complex system 1.

The first and second light planes P1, P2 may be formed by projection of a plurality of lines. In this case, the first light plane P1 and the second light plane P2 may be made of a plurality of light lines. Preferably, the light plane P1, P2 is obtained by a diffuse light source, or a laser projected on a light diffuser or on a diffractive optical element comprised in the light generator 31. In this case, the light planes P1, P2 form a continuous planar surface.

The processor 10 is configured to compute a speed of the object 5 from events caused by the object 5 intersecting the first light plane P1 and events caused by the object 5 intersecting the second light plane P2. Typically, in reference to figure 2, the object 5 may first intersect the second light plane P2 at a first instant t0. When moving towards the reference surface 4, the object 5 may then intersect the first light plane P1 at a next instant t1. An approximation of the speed of the object 5 relative to the reference surface can be computed from information such as the distance between the two light planes and the instants t0, t1.

The geometry parameters, such as the relative position of the first and second light planes P1, P2, the orientation and the modulation or patterns used to emit the light planes have a direct impact on the performances of the system 1. The number of light planes emitted by the light source 3 also impacts the performance. Preferably, the light source 3 is configured to emit spatially structured light forming a plurality of different light planes.

The light planes P1, P2 may be fanning out with an angle between them, preferably less than 10 °, and more preferably less than 5 °. The angle is small such that, when the system 1 is installed next to or on the reference surface 4, the light planes P1, P2 are preferably as parallel as possible to the reference surface 4 on which the object 5 held by the operator might be pointing. Advantageously, the first light plane P1 and the second light plane P2 do not intersect in the control space, that is there is no point in the control space belonging to the first light plane P1 and the second light plane P2. As will be seen later, if the two light planes P1, P2 intersect in a point of the control space, the processor 10 might not be able to compute the speed of the object 5 in this point.

Preferably, the first light plane P1 is parallel to the reference surface 4. Typically, the light generator 31 emitting the first light plane P1 is disposed horizontally or oriented by the internal processing unit 32 in a direction parallel to the reference surface 4. In the case where the first light plane P1 is formed by a plurality of light lines, the plurality of light lines might all belong to a same plane parallel to the reference surface 4.

Preferably, a distance between the first light plane P1 and the reference surface 4 is less than 5 cm, preferably less than 2 cm, and more preferably less than 1 cm. Such a small distance allows to transform the reference surface 4 into a tactile interface, the object 5 being moved next to the reference surface 4, at a distance of the reference surface 4 less than the distance between the first light plane P1 and the reference surface 4 This allows to detect motion of a tip of the object 5 near the reference surface 4 and helps eventually detecting contact of the object 5 with the reference surface 4.

The distance is understood, for any point of the first light plane P1 inside the control space (typically over the reference surface 4), as the length of the shortest segment joining the point of the first light plane P1 and the closest point belonging to the reference surface 4. In the illustrated configuration where the first light plane P1 is parallel to the reference surface 4, the distance is measured along a direction orthogonal to the reference surface 4, namely on axis Z.

Preferably, a distance between the first light plane P1 and the second light plane P2 within the control space is known for every point of the first light plane P1 and the second light plane P2. For example, a database accessible by the processor 10 may contain a distance value for each pixel of the sensor 20 reflecting the distance between the first light plane P1 and the second light plane P2 at the physical location to which the pixel corresponds. More preferably, the distance between the first light plane P1 and the reference surface 4 is also known.

Using the distance between the two light planes P1, P2 allows the processor 10 to compute a motion, that is position and speed, of the object 5 moving in the control space dynamically at every location within the control space.

More precisely, when the processor 10 receives an event informing that the object 5 is crossing the second light plane P2, the processor 10 can determine the coordinate Z corresponding to the distance to the reference plane 4, by interpolation with the stored information of the distance between the two light planes P1, P2 and adding the distance between the reference surface 4 and the first light plane P1.

To compute the speed of the object 5 crossing the light planes P1, P2 towards the reference surface 4, the processor 10 can store the time *t*₀ at which the tip of the object 5 might intersect the second light plane P2. When the processor 10 receives an event informing that the object 5 is crossing the first light plane P1, at instant *t*₁, the speed can be approximated by the processor 10 by dividing the stored information of the distance between the two light planes P1, P2 in the intersection point, by the time difference *t*₁ *- t*₀. Next, when the processor 10 receives an event informing that the object 5 is not crossing the first light plane P1 anymore, and still crossing the second light plane P2, at instant *t*₂, the processor 10 can compute the speed of the object 5 moving away from the reference surface 4 by dividing the stored distance between the two light planes P1, P2 in the intersection point by the time difference *t*₂ - *t*₁*.*

Therefore, the presence of at least two light planes P1, P2 allows to compute the speed of the object 5 in the control space, relative to the reference surface 4, when the object intersects with the first light plane P1 and the second light plane P2. As explained below, the two light planes P1, P2 should then not intersect inside the control space, or the speed information might be blurred, that is could not be computed at the locations corresponding to the intersection points.

Typically, the processor 10 is configured to compute and/or store the information of a relative position of the light source 3 in the control space. The angles between the first and second light planes P1, P2 is controlled by the processor 10 and/or the internal processing unit 32.

Preferably, the second light plane is also parallel to the reference surface 4. The second light plane P2 is advantageously parallel to the first light plane P1. This allows an easy computation of the speed of the object 5 by the processor 10 when the object 5 intersects the first and second light planes P1, P2. Since only one distance is stored, the processor 10 can directly approximate the speed of the object 5, independently of its position over the reference surface 4, using solely the time difference and the known distance between the light planes P1, P2. More preferably, the first and second light planes P1, P2 are parallel to each other and parallel to the reference surface 4, that is the first and second planes P1, P2 are orthogonal to the direction Z.

The distance between the first light plane P1 and the second light plane P2 is less than 2 cm, preferably less than 1 cm, and more preferably less than 5 mm. As previously, the distance is understood, for any point of the first light plane P1 inside the control space (typically over the reference surface 4), as the length of the shortest segment joining the point of the first light plane P1 and the closest point belonging to the second light plane P2. Typically, if both the first and second light planes P1, P2 are normal to the axis Z as illustrated in figure 3, the distance between the first and second light planes P1, P2 is measured along the axis Z.

This allows for a precise localization of the object 5 along the direction Z orthogonal to the reference surface 4. Since the system 1 aims at detecting the intersection of the object 5 with the light planes P1, P2, the distance between two adjacent planes P1, P2 must be small. If two light planes P1, P2 are too spaced, the existence or the precision of the location of the intersection point may be no longer guaranteed. Indeed, if the distance between the two light planes P1, P2 is important, the precision of the system 1 will be limited by the time for the object 5 to cross the two successive light planes P1, P2..

Preferably, the light source 3 comprises a plurality of light generators 31, each light generator 31 emitting a light plane respectively. The light generators 31 might be oriented in different directions, but preferably form light planes parallel to each other. The light generators 31 may be independently controllable by the internal processing unit 32. As will be explained in more details below, this allows to generated light planes with different modulation

Alternatively, the system 1 comprises a plurality of light sources 3 emitting light planes from different locations. For instance, a first light source might be disposed on a first side of the reference surface 4, while a second light source might be disposed on a second side of the reference surface 4, next to the first side of the reference surface 4. The first and the second light sources are oriented towards the control space, and can project light lines almost perpendicularly. For instance one light source has an optical axis parallel to the direction X, while another light source has an optical axis parallel to the direction Y. In this embodiment, it is possible to obtain a light plane forming a grid of light lines, for instance the first light source or the first light generator 31 forming rows of the grid, while the second light source or the second light generator 31 forms the columns of the grid. This can help solving occlusion problems, since in case an alien object prevents a light line from the first light source from intersecting the object 5 in the control space, the light line from the second light source might still intersect the object 5, which can be identified with the camera 2..

Preferably, the processor 10 is configured to discriminate events caused by the object 5 intersecting the first light plane P1 from events caused by the object 5 intersecting the second light plane P2. This allows to detect effectively which light plane P1, P2 is crossed by the object 5.

Typically, the light source 3 is configured to illuminate the first light plane P1 with a first light pattern or with a first timing and to illuminate the second light plane P2 with a second light pattern or a second timing, the processor 10 being configured to discriminate the events based on light pattern or timing.

For instance, the internal processing unit 32 controls the light generator 31 such that it emits spatially structured light with a light pattern, that is modulation. When a light plane is intersected by the object 5 in the control space, light is reflected on the object 5 and the event-based camera 2 detects a change and emits events reflecting the modulation. The processor 10 can recover the modulation or light pattern, and therefore determine which light plane P1, P2 has been intersected. Based on the known location of the light plane respective to the reference surface 4, the processor 10 can determine a position of the object 5 relative to the reference surface 4, specifically the distance of the object 5 from the reference surface 4.

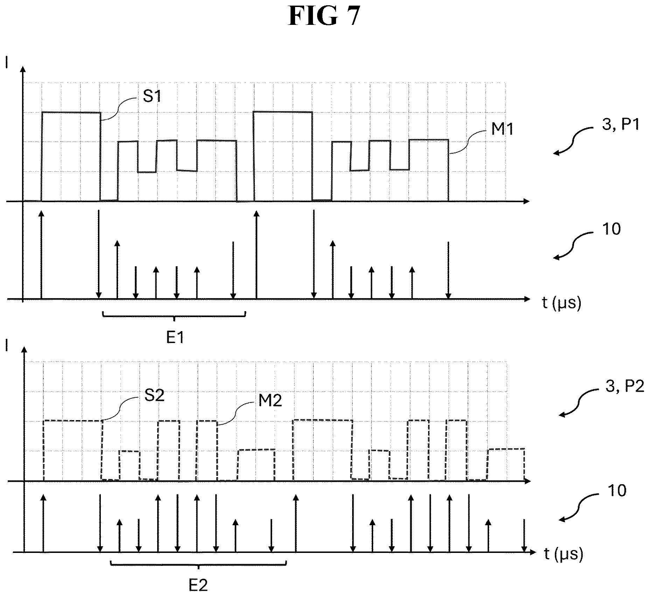

In reference to figure 7, the first light plane P1 is modulated using two light levels I, that is produces light according to a first time sequence M1 alternating between the first light level (or light intensity) and the second light level with a first pattern. Each sequence may start with a light emitted at a specific intensity S1, during a specific time. Similarly, the second light plane P2 is modulated according to a second time-sequence M2 wherein the light intensity I oscillates between two light levels with a second pattern, after a start sequence S2. When the object 5 intersects the second light plane P2, the light is reflected on the object 5, and the event-based camera 2 detects the light changes following the second pattern. A sequence of events E2 is then generated and transmitted to the processor 10. The sequence of events E2 corresponds to a plurality of decrease or increase in light intensity at a specific timing, which reflects the intensity difference. The processor 10 is configured to recognize the second pattern M2 in the sequence of events E2 and determines that the second light plane P2 is crossed. Similarly, when the object 5 intersects the first light plane P1, the light is reflected on the object 5, and the event-based camera 2 starts detecting light changes following the first pattern M1. Then, the processor 10 receives events following the first sequence E1 dictated by the first pattern M1 and events following the second sequence E2 and determines that the object 5 is now crossing both light planes P1 and P2. It can consequently compute the speed of the object 5 moving towards the reference surface 4, as explained previously.

In the modulation, the difference in intensity between the light levels, for instance between the first light level and the second light level, is sufficiently high so that the transition from the first level to the second level (or from the second level to the first level) is detected by the sensor 20 and triggers an event. One light level might correspond to zero intensity. In other words, the threshold of the sensor 20 is set as a contrast, and the light level value for which the contrast with respect to the ambient light is the threshold is detected by the sensor 20 and corresponds to an event.

Advantageously, the lights levels are chosen such that a slight change in light intensity will not affect the detection of the light sequence by the processor 10. The generated events, represented by arrows on figure 7, are different if the change is an increase or a decrease (on or off events).

Advantageously, the modulation allows to discard events which are not generated by an object crossing the light planes P1, P2. For instance, if the luminosity of the room wherein the system 1 is used changes, the resulting events might be automatically identified as noise by the processor 10, or preferably by the internal processing unit 22, and discarded, as they will not follow any specific light pattern. This can be obtained using a filter as specified below.

The modulation causes a specific sequence of events to be generated in the sensor 20 of the event-based camera 2. Advantageously, using light modulation allows the event-based camera 2 to detect the object 5 in the control space, even if it is static, the light reflected on the static object 5 being still reflected following the light pattern. As will be explained in more details later, the sensor 20 is preferably tuned so that it is only sensitive to fast light pulses, in which case, slow dynamic such as a human motion in the scene will not be generating events.

Different modulation strategies, that is light patterns, can be used.

For instance, the light source 3 may emit light comprising successive repeated intensity modulation patterns, as illustrated in figure 7. Intensity modulation pattern may consist of a single intensity maximum, such as a pulse, typically a rectangular pulse, or a sequence of alternating intensity minima and maxima. The modulation pattern might also be sinusoidal or a more complex pattern, such as a period pseudo-random white noise. The modulation pattern is repeated so that a periodic intensity results. The first light plane P1 and the second light plane P2 can be modulated with a different light pattern.

Preferably, the internal processing unit 22 of the event-based camera 2 monitors the pixels of the sensor 20 to detect the light pattern. Preferably, the light modulation ensures that only events caused by the object crossing the first or second light plane P1, P2 will be generated. To do so, the processor 10 may transmit the light pattern to the internal processing unit 22 and/or the internal processing unit 22 may store information about the different light patterns used by the light source 3. For instance, the event-based camera 2 extracts the light lines modulated in time and projected by the light source 3 with a process like the one presented in EP3518529A1.

In a first example, the light source might be encoded with a frequency pattern, like a flickering captured by the sensor 20 and exploited by the processor 10 to extract some useful information. The frequency pattern can be a simple square wave characterizing two light levels generating events. The processor can extract information following a process as described in US10302420.

Advantageously, the sequence of events which do not correspond to an object crossing a light plane P1 or P2 are filtered by the internal processing unit 22 before being sent to the processor 10. This allows to reduce the number of events received by the processor 10. Preferably, when the sequence corresponding to one light plane P1, P2 is detected on one pixel of the sensor 20, the internal processing unit 22 is configured not to transmit all sequences of events by the same pixel, since only the time when the object 5 intersect the light plane might be of interest for the processor 10.

Preferably, the system 1 is configured to implement a filtering function for detecting only high frequency variation of light in the field of view. Typically, the internal processing unit 22 implements an event filter such as described in WO/2021/180813. Only high frequency variation of light reflected by the object 5 might then generate events transmitted to the processor 10, when the object intersects with the first light plane P1 and/or the second light plane P2. This allows to reduce the number of events received by the processor 10 and to reduce the risk of overloading the communication bus 23 in the case of event burst for instance. The dynamic positioning of the object 5 and the computation of the speed of the object 5 can be done faster.

In an embodiment, the first light plane P1 is modulated using a first frequency pattern, and the second light plane P2 is modulated using a second frequency pattern, the first frequency pattern being different from the second frequency pattern. In this case, the phase or the frequency of the light generating the light plane P1, P2 might vary with time. The intensity may vary in time between different non-zero levels as explained before but could also vary between a zero-intensity level and a non-zero intensity level, as long as the intensity of the non-zero level is sufficient to trigger an event by the sensor 20. This allows the processor 10 to detect which light plane the object 5 is crossing, and to estimate its distance relative to the reference surface 4.

The system 1 might identify independently the different projected light planes P1, P2. To do so, the system 1 can comprise a hardware synchronization of the light source 3 and the event-based camera 2, for instance using the connecting bus 23 and/or the processor 10. Alternatively, the event-based camera 2 can detect external triggers projected by the light source 3.

Alternatively, or in combination with modulation, the light source might be configured to illuminate the light planes P1, P2 with different timings. For instance, the first frequency pattern corresponds to a first timing, and the second frequency pattern corresponds to a second timing. Preferably, the first light plane P1 and the second light plane P2 might be illuminated alternatively. For instance, the first light plane P1 is enlightened consecutively to the enlightenment of the second light plane P2. In this way, the first and second timing are such that the two light planes might never be illuminated at the same time. In this way, the processor 10 which receives events from the event-based camera 2 at an instant t0 can recover which light plane is intersected by the object 5, based on the timing information, that is if the light source 3 is configured to illuminate the first light plane P1 at instant t0, then the processor 10 processes that the first light plane is intersected by the object, and reciprocally if the second light plane P2 is illuminated at instant t0.

Preferably, each event is associated with an address reflecting a position relative to the reference surface 4 wherein the variation of light occurred. For instance, the event-based camera 4 has a field of view covering the reference surface, such that each pixel of the sensor 20 is associated with a position in the plane (X,Y) of the reference surface 4. This allows for better positioning the object 5 inside the three-dimensional control space, using both the address of the events on the sensor 20, that is in the pixel grid, and the knowledge of which light plane is intersected.

Preferably, the system 1 is configured to implement a spatial filtering of signals transmitted by the sensor 20 after detecting the frequency pattern. For instance, the internal processing unit 22 might only transmit to the processor 10 events that are generated by a movement inside the control space. It allows to filter events coming from other regions of the control space.

Preferably, the event-based camera 2 comprises an optical filter filtering out light wavelengths outside of a light wavelength or a range of light wavelengths that are emitted by the light source 3. This also contributes to reducing the volume of information transmitted to the processor 10 and reduces the risk of overloading. Finally, this enables to improve the detection probability in bright ambient light at a given power level of the light source 3. Indeed, the system 1 is either operational in brighter environment or able to reduce the power level of the light source 3 and thus its power consumption.

### Detection of the object

The system 1 provides spatial features of the object 5, for instance motion detection or dynamic position of the object 5 near the reference surface 4. Preferably, the system 1 is configured to determine whether events are caused by the object 5 based on the respective addresses associated with the events, or not. This can be done by storing the addresses of past events caused by the object 5 and checking a continuity in the addresses with time.

The system 1 may provide an input to an external system 6. For instance, if a second moving object enters the control space, the processor 10 is preferably configured not to transmit information to the external system 6 relative to the second moving object. The second object will generate events associated with addresses that are not in line with the addresses associated with events caused by the object 5.

When the operator uses the object 5 in the control space, next to the reference surface 4, the object 5 intersects the second light plane P2 or/and the first light plane P1.

The object 5 can be any object, preferably an elongated object such as for instance a finger or a pen or a passive stylus. The event-based camera 2 receives a reflection of the light source 3 on the object 5 and detects the presence of the object 5. The processor 10 may estimate the exact intersection coordinates on the reference surface 4 using a homography or more generally a spatial transformation and the addresses associated with events caused by the object 5.

The homography may be calibrated for each light plane before using the system 1. More precisely, the event-based camera 2 uses a calibrated spatial transformation for the light plane to deduce the coordinates (X,Y) of the object 5 on the reference surface 4.

In the embodiment where the distance from the light plane intersected by the object 5 to the reference surface 4 is known, a three-dimensional position of the object 5 in the light plane P can be computed by the processor 10. The distance of the object 5 from the reference surface 4, that is the coordinate of the object along the direction Z is obtained by determining which light plane P1, P2 the object 5 intersect. Preferably, the light source 3 projects a plurality of light planes parallel to the reference surface 4. This allows to quantize the distance of the object 5 to the reference surface 4.

The presence of at least two light planes P 1, P2 allows to compute the speed of the object 5 in the control space, relative to the reference surface 4, when the object intersects with the first light plane P1 and the second light plane P2, as explained before.

This allows to augment the input with a speed information. The speed information is relevant for several applications of the system 1, for instance when the system is used to emulate the behavior of musical instruments. The reference surface 4 can represent a piano key or a taut membrane of a drum. The intensity of the sound produced might be related to the speed information.

Preferably, the processor 10 is configured to track a position of the object 5 relative to the reference surface 4 based on addresses of events caused by the object 5 intersecting the first light plane P1 or the second light plane P2. It can be done by continuity of the addresses and helps discriminating another object from the object 5 whose dynamic positioning is sought.

Upon detection by the event-based camera 2 that a light plane P1, P2 is crossed, the processor 10 can recover which light plane the object 5 is crossing. If the object 5 intersects several light lines, the event-based camera 2 may trigger hovering or contact detection for instance, as explained below.

Preferably, the processor 10 can reconstruct a three-dimensional shape of the intersecting object 5 in order to further interpolate or extrapolate its position inside the control space. For instance, when the processor 10 identifies that a plurality of pixels of the sensor 20 generate events following a sequence corresponding to one light plane P1, P2, the processor 10 may deduce the contour of the object 5 in the plane (X,Y) parallel to the reference surface 4. When the processor 10 receives events in a sequence corresponding to adjacent light planes, the processor 10 may then reconstruct a three-dimensional shape by concatenating the two-dimensional contours. This allows to augment the input sent to the external system 6 with more information, in particular to detect if the object 5 is in contact with the reference surface 4 or hovering the reference surface 4 for instance.

In case a contact with the reference surface 4 is detected, the processor 10 may report to the external system 6 a contact event and track the contact point trajectory until the end of the contact. This allows use of the system 1 for writing or drawing applications, as illustrated in figure 5.

The movement M of the object 5 on the reference surface 4 is transmitted to the external system 6 with a screen 61, where the movement M is represented as a drawn line D.

Estimating the three-dimensioncal shape of the object 5 allows to use the system 1 in various applications. For instance, in the case the operator uses a bare hand to interact with the reference surface 4, the processor 10 may detect if the operator uses one finger or several fingers. For instance, in the case the operator holds a deformable object such as a stylus, the diameter of the deformable object can be estimated to detect a pressure on the stylus that would correspond to a click.

Preferably, the processor 10 is configured to compute an orientation of the object 5 relative to the reference surface 4 based on addresses of events caused by the object 5 intersecting the first light plane P1 and events caused by the object intersecting the second light plane P2. For instance, if the processor 10 detects that the addresses of events caused by the object 5 intersecting the first light plane P1 and the addresses of events caused by the object 5 intersecting the second light plane P2 are different, the processor 10 can recover an orientation of the object 5 in the control space, using the difference of location and the known distance between the two light planes P1, P2.

Advantageously, an orientation of the object 5 in the reference surface 4, that is in plane (X,Y), can also be estimated by the processor 10 using the addresses of events caused by the object 5 intersecting one light plane.

This allows to augment the input with an orientation information. The orientation information can be relevant for use of the system in a drawing application illustrated in figure 5 for instance. The thickness and style of the line drawn by the operator may depend on the orientation information. For instance, when using an oblique pen for calligraphy, the thickness of drawn lines changes depending on how the pen is held, that is depending on its orientation. The orientation information can also be used without a contact surface to estimate the direction of the object when pointing an element in a user interface.

For instance, the reference surface 4 might be a table where is disposed a screen of a computer. The system 1 communicates with the computer so that the operator can use the table as a virtual keyboard or drawing interface. The motion of the object on the control surface can be displayed on the screen in real time. In another example, the reference surface 4 can be a display or non-tactile screen connected to a computer, and the system 1 can provide the input to the computer so the operator can use the reference surface 4 as a tactile interface.

As an example, the control surface might be a display or television screen, and the object might be a finger of the operator. The system can be disposed so as to project light planes broadly parallel to the screen. The position of the finger and its orientation allows the processor 10 to detect what is pointed on the reference surface 4 and to drive a mouse-type pointer on the display or television screen.

For illustrative purpose, we now describe in more details a mode of operation of the system 1. In the detailed embodiment, the light source 3 projects two laser planes that are parallel to the control surface of a white board. The system 1 is disposed at an edge of the white board (figure 6) or a table (figure 5). The first laser plane and the second laser plane are modulated with two different light or frequency patterns. The event-based camera 2 is placed in the same location (figure 5), at a baseline with respect to the laser source. Alternatively, the event-based camera 2 is disposed facing the white board, with an optical axis in a direction orthogonal to the white board surface (figure 6).

When no object is present in the control space, the event-based camera 2 does not generate data.

A finger 5 is approaching the control surface 5 and starts hovering it. The finger is moving at the distance of the white board where the light source 3 is placed and intersects an upper laser plane P2.

The finger 5 reflects the light of the upper laser plane P2 and generates events on the event-based camera 2 showing the pattern of its modulation. The processor 10 receives the addresses associated with the events, and determines which pixels produce the events consistent with the upper laser plane modulation. From the pixels detecting the upper laser modulation, the system 1 extracts the position of the finger 1. This can be done using basic clustering and averaging. Interestingly, from the cluster of pixels detecting the upper laser modulation, the system 1 could estimate the shape of the finger 5 and identify it.

The position of the finger can be tracked and transmitted to the external system 6 for use in an application. When the finger 5 is lowered to the distance of the lower laser plane P1, the same process happens with the lower laser modulation and two positions are extracted by the processor, one position for each laser plane. The system 1 can merge the two positions to compute some measurements, depending on the application. For instance, the processor can transmit to the external system 6 the location of the contact point, a tap detection, or the speed of the motion of the finger.

When the lower modulation is no longer detected by the pixels, the system 1 detects that the finger 5 is being removed from the control surface and is hovering the white board. When the upper modulation is no longer detected by the pixels, the system 1 detects that the finger is removed.

In the present invention, the control surface is not limited to a physical flat surface. The control surface might be the light plane, which then does not require a physical surface as a reference. The control surface could be rendered in a virtual space, for instance for use of the system in virtual reality (VR) applications and/or with haptic feedback from another device such as a hand-controller, or any dedicated device.

### Relative positioning of the camera and light source

The system 1 may, further comprise a support, wherein the light source 3 and the event-based camera 2 are fixed to the support. This allows the system 1 to run a calibration process once, at the beginning of motion detection or dynamic positioning for instance. The event-based camera 2 records its relative position to the light planes emitted by the light source 3.

In an embodiment, the light source 3 generating the light planes P1, P2 and the event-based camera 2 are not mounted on a rigid system.

Preferably, the light planes P1, P2 can be tracked in real-time during operation of the system 1. The processor 10 implements a live calibration of the relative position of the event-based camera 2 and the light planes P1, P2.

For instance, the reference surface 4 might comprise a plurality of active markers 7 disposed each at a respective reference position. The active markers 7 may be connected to the event-based camera 4 by wires or by wireless communication. The processor 10 is configured to compute a position of the event-based camera 4 relative to the reference surface 4 based on the respective reference position of the plurality of active markers 7.

The active markers 7 may be disposed on the edges of a rectangular reference surface 4 for instance, as illustrated in figure 1. The processor 10 can then determine during operation the position of the light planes P1, P2 with respect to the event-based camera 2 using the reference position of the active markers 7 on the reference surface 4.

The active marker 7 might use binary symbol time encoding. The active marker 7 might use multiple simple pulses with triggers, as used in structured light systems.

The active marker 7 might comprise a processing unit and a light-emitting diode (LED). The light-emitting diode of the active marker can emit infrared light at a specific wavelength using modulation.

The active marker 7 can be synchronized with the event-based camera 2 by a wired connection between the event-based camera 2 and the processing unit of the active marker 7.

Alternatively, the active marker 7 can be synchronized with the event-based camera 2 using wireless synchronization. For instance, using radio frequency signals, or a coded IR flash sent out by the event-based camera and recognized by the processing unit.

Preferably, the processing unit can transmit some information through a modulated ID of the active marker or through visible light communication (VLC) modulation. The processor 10 then retrieves from which active marker 7 an input is received and can reconstruct the reference surface 4. Note that it can be implemented without physically having a connection between the processor 10 and the active markers 7. Indeed, each active marker 7 can contain its own embedded processor to send modulated ID without any communication with the processor 10 (wired or wireless).

The active marker 7 can advantageously create an arbitrary reference surface 4 in the real-world, where inputs from augmented reality (AR) systems can be received when an operator enters the reference surface 4. The operator might be localized relatively to the reference surface 4 simultaneously with the calibration of the event-based camera 2.

## Claims

1. A system for determining spatial features of an object (5) within a control space, comprising:
- a light source (3) configured to illuminate the control space,
- a camera (2) whose field of view includes the control space,
**characterized in that** the camera (2) is an event-based camera configured to detect a variation of light in the field of view and generate an event when a variation of light is detected, and **in that** the light source (3) is configured to emit spatially structured light forming a first light plane (P1) and a second light plane (P2), the first light plane (P1) being different from the second light plane (P2), and **in that** the system (1) comprises a processor (10) configured to receive events from the event-based camera (2), and to compute a speed of the object (5) from events caused by the object (5) intersecting the first light plane (P1) and events caused by the object (5) intersecting the second light plane (P2).

2. The system of claim 1, wherein the first light plane (P1) is parallel to a reference surface (4) delimiting a side of the control space.

3. The system of any one of claims 1 and 2, wherein a distance between the first light plane (P1) and the second light plane (P2) within the control space is known for every point of the first light plane (P1) and the second light plane (P2).

4. The system of any one of claims 1 to 3, wherein the first light plane (P1) is parallel to the second light plane (P2).

5. The system of any one of claims 1 to 4, wherein the processor (10) is configured to discriminate events caused by the object (5) intersecting the first light plane (P1) from events caused by the object (5) intersecting the second light plane (P2).

6. The system of claim 5, wherein the light source (3) is configured to illuminate the first light plane (P1) with a first light pattern or with a first timing and to illuminate the second light plane (P2) with a second light pattern or a second timing, the processor (10) being configured to discriminate the events based on light pattern or timing.

7. The system of claim 6, wherein the first light plane (P1) is modulated using a first frequency pattern, and the second light plane (P2) is modulated using a second frequency pattern, the first frequency pattern being different from the second frequency pattern.

8. The system of any one of claims 6 and 7, wherein the light source (3) is configured to illuminate the first light plane (P1) and the second light plane (P2) consecutively.

9. The system of any one of claims 1 to 8, wherein the system is configured to implement a filtering function for detecting only high frequency variation of light in the field of view.

10. The system of any one of claims 1 to 9, wherein each event is associated with an address reflecting a position relative to the reference surface (4) wherein the variation of light occurred, and wherein the processor (10) is configured to determine whether events are caused by the object (5) based on associated addresses.

11. The system of any one of claims 1 to 10, wherein each event is associated with an address reflecting a position relative to the reference surface (4) wherein the variation of light occurred, and wherein the processor (10) is configured to compute an orientation of the object (5) relative to the reference surface (4) based on addresses of events caused by the object (5) intersecting the first light plane (P1) and events caused by the object intersecting the second light plane (P2).

12. The system of any one of claims 1 to 11, wherein each event is associated with an address reflecting a position relative to the reference surface (4) wherein the variation of light occurred, and wherein the processor (10) is configured to track a position of the object (5) relative to the reference surface (4) based on addresses of events caused by the object (5) intersecting the first light plane (P1) or the second light plane (P2).

13. The system of any one of claims 1 to 12, wherein each event is associated with an address reflecting a position relative to the reference surface (4) wherein the variation of light occurred, and wherein the processor (10) is configured to reconstruct a three-dimensional shape of the object (5), based on addresses of events caused by the object (5) intersecting the first light plane (P1) and the second light plane (P2).

14. The system of any one of claims 1 to 13, further comprising a support, wherein the light source (3) and the event-based camera (2) are fixed to the support.

15. The system of any one of claims 1 to 14, further comprising a plurality of active markers (7) disposed each at a respective reference position relative to the reference surface (4), and connected to the event-based camera (2), wherein the processor (10) is configured to compute a position of the event-based camera (2) relative to the reference surface (4) based on the respective reference position of the plurality of active markers (7).
